# DEMANDE DE BREVET EUROPEEN

(11) **EP 0 597 783 A1**
(43) Date de publication de la demande: **18.05.1994**
(21) Numéro de dépôt: 93420449.6
(22) Date de dépôt: 10.11.1993
(51) Int. Cl.: H04N 7/20

(54) **Dispositif de couplage pour la réception de canaux correspondant à des émissions de télévision en provenance de satellites de rediffusion différents**

(30) Priorité: 12.11.1992 FR 9213809
(71) Demandeur: TELECIEL, F-69570 Dardilly (FR)
(72) Inventeur: Nicol, Thierry, F-69270 Fontaines-sur-Saone (FR); Vettese, Sylvain, F-38790 Charantonnay (FR)
(74) Mandataire: Monnier, Guy

(57) **Abrégé**

A chaque antenne (1,2) est associé un convertisseur LNB (3,4) de modèle standard B.I.S. Un premier filtre (6) délimite une sous-bande inférieure (B) de 400 Mégahertz de largeur pour le premier satellite. Un élévateur de fréquences (9-11) suivi d'un second filtre délimitent une sous-bande supérieure (B') pour le sceond satellite. Ces deux sous-bandes (B,B') sont alors simplement réunies sur un câble commun de sortie (14).

## Description

La présente invention se rapporte à un dispositif de couplage pour la réception de canaux correspondant à des émissions de télévision en provenance de satellites de rediffusion différents.

Il est actuellement possible de recevoir en un même lieu les émissions de télévision provenant de satellites de rediffusion différents.

Dans ce but, plusieurs procédés ont été développés à l'heure actuelle :

Le procédé à priori le plus simple à concevoir consiste à utiliser une seule et même antenne de réception pour l'ensemble des satellites et à pointer chaque fois cette antenne sur le satellite désiré. Cette solution, qui nécessite l'utilisation d'un moteur électrique pour la rotation de l'antenne, a pour inconvénients d'être lourde en installation et en entretien. Elle est d'autre part adaptée aux installations particulières et ne peut convenir aux installations collectives.

Un autre procédé connu, qui a aussi pour inconvénient de n'être applicable qu'aux installations particulières, consiste à prévoir une antenne par satellite, le plus généralement deux antennes pointées chacune sur un satellite, et à installer un commutateur, par exemple électromécanique, en sortie de ces deux antennes pour brancher soit l'une, soit l'autre, de celles-ci sur le câble coaxial commun. Cette autre solution a aussi pour inconvénient d'être délicate en raison de la présence de ce commutateur.

Les deux solutions précédentes utilisent soit un soit deux convertisseurs standardisés dits "LNB" qui effectuent, en sortie de l'antenne de réception, une conversion en première Fréquence Intermédiaire qui correspond actuellement à une bande standardisée allant de 950 à 2050 Mégahertz.

Les récepteurs de télévision par satellite sont d'ailleurs construits pour recevoir cette bande de fréquences standardisée de 950 à 2050 Mégahertz.

S'agissant d'antennes collectives de réception, la solution actuellement préconisée consiste à recevoir les émissions d'un premier satellite sur une première antenne couplée à un classique convertisseur LNB opérant dans la gamme standard 950 - 2050 MHz, et les émissions d'un autre satellite sur une autre antenne couplée à un convertisseur spécial et opérant dans une autre gamme de Fréquences Intermédiaires que cette gamme standard : par exemple de 2100 à 3000 MHz. Une telle solution est bien évidemment complexe et onéreuse, car il faut ensuite coupler ces deux gammes de fréquence et être en mesure d'exploiter la seconde gamme, non standardisée, de Fréquences Intermédiaires.

L'invention vise à remédier à tous ces inconvénients. Elle se rapporte à cet effet à un dispositif de couplage pour la réception de canaux correspondant à des émissions de télévision en provenance d'au moins deux satellites de rediffusion différents, ce dispositif faisant partie d'une installation de réception qui comporte une antenne de réception pour chaque satellite, et se caractérisant en ce que :
. il est prévu un convertisseur standard "LNB" en première Fréquence Intermédiaire pour chaque satellite, ce convertisseur transposant donc la bande reçue en la bande standard "B.I.S" en première Fréquence Intermédiaire, par exemple la bande standard 950 - 2050 Mégahertz ;
. il est prévu un premier filtre passe-bande qui reçoit les signaux en première Fréquence Intermédiaire provenant du convertisseur LNB associé à un premier satellite et qui ne conserve de ces signaux qu'une sous-bande de fréquences B située dans la partie inférieure de ladite bande standard B.I.S et de toute façon de largeur inférieure à la moitié de cette bande standard ;
. il est prévu, en sortie du convertisseur LNB associé à l'autre satellite, un dispositif de transposition de fréquence qui décale, vers les fréquences plus élevées et d'une valeur égale ou supérieure à la largeur de ladite sous-bande B du premier filtre, les Fréquences Intermédiaires relatives à l'ensemble des signaux reçus par ce second satellite, ce dispositif de transposition étant suivi d'un second filtre passe-bande qui confine ces derniers signaux dans une sous-bande B' dont la fréquence inférieure est légèrement supérieure à la fréquence supérieure de la sous-bande B du premier filtre et dont la fréquence supérieure est inférieure ou au plus égale à celle de ladite bande standard B.I.S ;

et en ce que les sorties de ces filtres passe-bande sont simplement couplées sur un câble de sortie commun en direction d'un ou plusieurs récepteurs de chaines satellite, ces récepteurs étant de type standard pour la réception de la bande B.I.S.

Dans le cas où la largeur de la bande standard B.I.S le permettrait, par exemple si elle couvrait la gamme allant de 950 à 2500 Mégahertz au lieu de 950 à 2050 Mégahertz, l'invention n'exclut pas la possibilité de réception, avec couplage sur ledit câble commun, des émissions en provenance d'un troisième satellite. Il faudrait alors, de façon semblable, prévoir de diviser la band B.I.S en trois parties B,B',B'' au lieu de deux (B et B'), dont :
. une partie inférieure B affectée au premier satellite ;
. une partie médiane B' affectée au second satellite ; et
. une partie supérieure B'' affectée au troisième satellite, et de prévoir en conséquence non seulement trois filtres passe-bande respectifs laissant entre elles un léger intervalle de sécurité, mais encore deux dispositifs de transposition de fréquence au lieu d'un seul, dont :
   - un premier dispositif qui décale les Fréquences Intermédiaires relatives au second satellite légèrement au-dessus de la bande B; et
   - un second dispositif qui décale les Fréquences intermédiaires relatives aux troisième satellite légèrement au-dessus de la bande B'.

Dans l'hypothèse où la bande standard B.I.S serait encore plus large, l'invention n'exclut pas la possibilité d'extension de ce dispositif de couplage à un nombre de satellites supérieur à trois.

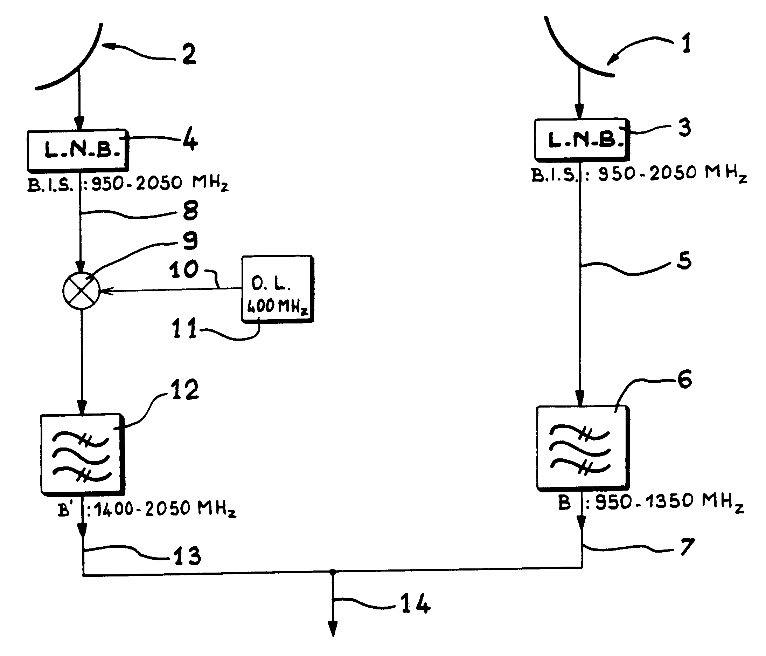

De toute façon, l'invention sera bien comprise, et tous ses avantages et caractéristiques ressortiront mieux, lors de la description suivante d'un exemple non limitatif de réalisation, en référence à la figure unique annexée qui est un schéma synoptique d'une installation de réception d'émissions de télévision en provenance de deux satellites de rediffusion différents.

En se référant à cette figure unique, cette installation est équipée de deux antennes de réception 1,2 pour satellites, qui comportent dans cet exemple chacune um réflecteur parabolique, et qui sont pointées sur deux satellites de rediffusion différents.

Ces deux antennes 1,2 sont respectivement connectées à un convertisseur 3,4 en première Fréquence Intermédiaire, ces convertisseurs étant de type standard, dits "L.N.B" et disponibles dans le commerce.

Ils transposent les fréquences reçues, qui sont généralement comprises entre 10,850 Gigahertz et 12,750 Gigahertz, en fréquences comprises dans la "Bande-Intermédiaire-Satellite", ou "B.I.S", qui est actuellement en Europe comprise entre 950 et 2050 Mégahertz.

L'invention utilise la réalité actuelle qui veut que, transposées en B.I.S, toutes les émissions de télévision sont en fait concentrées dans la moitié inférieure de cette Bande Intermédiaire Satellite, et plus précisément dans environ les premiers 400 Mégahertz de cette bande, toutes les fréquences supérieures, donc comprises entre 1350 et 2050 Mégahertz restant somme-toute disponibles.

Le procédé utilisé consiste alors d'une part à confiner strictement, en B.I.S et par filtrage, les canaux reçus du premier satellite (antenne 1) dans cette bande inférieure d'environ 400 Mégahertz, et d'autre part à décaler vers le haut, toujours en B.I.S et d'au moins ces 400 Mégahertz, les canaux reçus du second satellite (antenne 2), un filtrage étant utilisé alors pour prévoir un espace de sécurité entre ces deux sous-bandes ainsi que pour limiter la seconde sous-bande à la valeur supérieure standardisée de 2050 Mégahertz. Ces deux sous-bandes ainsi nettement délimitées et séparées peuvent alors sans inconvénient être réunies sur un seul et même câble, en direction du ou des utilisateurs équipés chacun d'un "tuner" de réception standard, et donc prévu pour la bande B.I.S précitée allant entre 950 et 2050 Mégahertz.

En conséquence, les signaux en sortie 5 du convertisseur LNB 3 sont appliqués à un filtre passe-bande 6, dont la largeur couvre la gamme comprise entre 950 et 1350 Mégahertz. Cette largeur de bande de 400 Mégahertz en première Fréquence Intermédiaire est actuellement suffisante pour englober toutes les émissions en provenance du premier satellite relatif à l'antenne 1.

Les signaux en sortie 7 du filtre 6 sont donc compris dans une première "sous-bande" de fréquences B qui s'étale entre 950 et 1350 Mégahertz.

Les signaux en sortie 8 de l'autre convertisseur LNB 4 sont, quant à eux, appliqués sur la première entrée d'un mélangeur de fréquence 9 qui reçoit sur son autre entrée 10 un signal à 400 Mégahertz en provenance d'un Osciliateur Local 11. Ce mélangeur 9 est suivi d'un filtre passe-bande 12 qui ne conserve que les fréquences comprises entre 1400 et 2050 Mégahertz.

Ce filtre 12 sert à la fois de filtre de suppression de la Fréquence Image et de filtre définissant, dans la gamme B.I.S, une autre "sous-bande" B' qui contient toutes les émissions reçues par l'antenne 2, décalées en Fréquence Intermédiaire de 400 Mégahertz vers le haut. Cette sous-bande B' ne débute cependant qu'à 1400 Mégahertz, c'est-à-dire à 50 Mégahertz au-dessus de la sous-bande B précitée, ce qui permet de ménager un espace de sécurité de 50 Mégahertz apte à s'affranchir des phénomènes de battement entre ces deux sous-bandes B et B' lorsque, comme on le verra ci-après, on les réunira sur un seul et même câble coaxial.

A noter qu'il est bien-entendu nécessaire de limiter la sous-bande B' à 2050 Mégahertz pour respecter la largeur totale standardisée pour la Bande Intermédiaire Satellite.

Finalement, les signaux en sortie 13 du filtre 12 et ceux en sortie 7 du filtre 6 sont tout simplement réunis, sans risques d'interférences, sur un câble de sortie commun 14, en direction d'un ou plusieurs récepteurs standardisés, et donc conçu pour recevoir la bande B.I.S.

Comme il va de soi, l'invention n'est pas limitée à l'exemple de réalisation qui vient d'être décrit. Au lieu de procéder, pour la transposition de 400 Mégahertz vers le haut, par addition d'un signal en provenance d'un Oscillateur Local, on pourrait aussi classiquement procéder par soustraction, en utilisant un Oscillateur Local à 2300 Mégahertz. L'invention pourrait aussi être appliquée à la réception de trois satellites, soit en se contentant de ne garder qu'une sous-bande de 300 Mégahertz environ par satellite et en répartissant les trois sous-bandes dans la bande B.I.S actuelle, soit en supposant que la bande B.I.S soit étendue, ce qui permettrait de la diviser, de même façon que précédemment et donc en utilisant deux dispositifs de transposition de fréquence au lieu d'un seul (9,11), en trois sous-bandes B,B',B'' de par exemple 400 Mégahertz environ, séparées l'une de l'autre par un intervalle de sécurité de 50 Mégahertz, ce principe étant plus généralement applicable à n satellites (n entier), avec alors n "sous-bandes" B1,B2,...Bn comprises dans la bande B.I.S et séparées l'une de l'autre par un intervalle de sécurité b, de l'ordre de 50 Mégahertz par exemple, et avec (n-1) dispositifs d'élévation de fréquence et n filtres passe-bande tous prévus pour définir et délimiter chacune de ces sous-bandes.

## Revendications

1. Dispositif de couplage pour la réception de canaux correspondant à des émissions de télévision en provenance d'au moins deux satellites de rediffusion différents, ce dispositif faisant partie d'une installation de réception qui comporte une antenne de réception (1,2) pour chaque satellite, caractérisé en ce que :
. il est prévu un convertisseur standard "LNB" (3,4) en première Fréquence intermédiaire pour chaque satellite, ce convertisseur transposant donc la bande reçue en la bande standard "B.I.S" en première Fréquence Intermédiaire, par exemple la bande standard 950 - 2050 Megahertz ;
. il est prévu un premier filtre passe-bande (6) qui reçoit les signaux en première Fréquence Intermédiaire provenant du convertisseur LNB (3) associé à un premier satellite et qui ne conserve de ces signaux qu'une sous-bande de fréquences B située dans la partie inférieure de ladite bande standard B.I.S et de toute façon de largeur inférieure à la moitié de cette bande standard ;
. il est prévu, en sortie du convertisseur LNB (4) associé à l'autre satellite, un dispositif de transposition de fréquence (9-11) qui décale, vers les fréquences plus élevées et d'une valeur égale ou supérieure à la largeur de ladite sous-bande B du premier filtre, les Fréquences Intermédiaires relatives à l'ensemble des signaux reçus par ce second satellite, ce dispositif de transposition étant suivi d'un second filtre passe-bande (12) qui confine ces derniers signaux dans une sous-bande B' dont la fréquence inférieure est légèrement supérieure à la fréquence supérieure de la sous-bande B du premier filtre et dont la fréquence supérieure est inférieure ou au plus égale à celle de ladite bande standard B.I.S ;
et en ce que les sorties de ces filtres passe-bande (6,12) sont simplement couplées sur un câble de sortie commun (14) en direction d'un ou plusieurs récepteurs de chaînes satellite, ces récepteurs étant de type standard pour la bande B.I.S.

2. Dispositif de couplage selon la revendication 1, caractérisé en ce que ladite sous-bande (B), conservée dans la partie inférieure de la bande standard B.I.S. pour la réception des émissions du premier et donc la sous-bande du premier filtre passe-bande (6), a une largeur de l'ordre de 400 Mégahertz.

3. Dispositif de couplage selon la revendication 1 ou la revendication 2, caractérisé en ce que ledit dispositif de transposition de fréquences (11,9) est prévu pour effectuer un décalage de fréquences de l'ordre de 400 Mégahertz.

4. Dispositif de couplage selon l'une des revendications 1 à 3, caractérisé en ce que lesdits filtres (6,12) et ledit dispositif de transposition de fréquence (10,11) sont dans leur ensemble prévus pour ménager un invervalle de sécurité au moins de l'ordre de 50 Mégahertz entre lesdites sous-bandes (B,B').

5. Dispositif de couplage selon la revendication 1, appliqué a la réception de canaux correspondant à des émissions de télévision en provenance d'un nombre entier n de satellites supérieur à deux, caractérisé en ce qu'il comporte de même façon n filtres passe-bande (6,12,...) affectés à n sous-bandes (B1,B2,..., Bn) comprises dans la bande B.I.S et séparées l'une de l'autre par un intervalle de sécurité b, de l'ordre de 50 Mégahertz par exemple, et en ce qu'il comporte en conséquence (n-1) dispositifs (9-11,...) d'élévation de fréquence prévus pour définir chacune de ces sous-bandes.
